# EUROPÄISCHE PATENTSCHRIFT

(11) **EP 2 504 656 B1**
(45) Veröffentlichungstag und Bekanntmachung des Hinweises auf die Patenterteilung: **19.08.2015**
(21) Anmeldenummer: 10782268.6
(22) Anmeldetag: 23.11.2010
(51) Int. Cl.: F28F 19/06, F28F 21/08, B23K 1/00, B23K 35/02

(54) **GELÖTETER ALUMINIUM-WÄRMEÜBERTRAGER**
SOLDERED ALUMINUM HEAT EXCHANGER
ÉCHANGEUR DE CHALEUR EN ALUMINIUM SOUDÉ

(30) Priorität: 25.11.2009 DE 102009055608
(43) Veröffentlichungstag der Anmeldung: 03.10.2012
(73) Patentinhaber: MAHLE Behr GmbH & Co. KG, 70469 Stuttgart (DE)
(72) Erfinder: TRAUB, Matthias, 70825 Korntal-Münchingen (DE); GRÜNENWALD, Bernd, 72622 Nürtingen (DE); EILEMANN, Andreas, 71729 Erdmannhausen (DE); GOERDELER, Matthias, 200127 Shanghai (CN); TÜRPE, Matthias, 71672 Marbach a. N. (DE)
(74) Vertreter: Grauel, Andreas
(86) Internationale Anmeldenummer: PCT/EP2010/068010
(87) Internationale Veröffentlichungsnummer: WO 2011/064199

(56) Entgegenhaltungen:
- EP-A1- 1 287 934
- EP-A1- 1 705 446
- EP-A1- 2 103 702
- JP-A- 11 000 790
- US-A1- 2004 035 911
- US-A1- 2007 224 445

## Beschreibung

Die Erfindung betrifft gelötete Aluminium-Wärmeübertrager.

Für die Herstellung von gelöteten Aluminium-Wärmeübertragern werden unter anderem Rohre als Bauteile eingesetzt. Die Rohre können sowohl geschweißt, gefaltet und anschließend verlötet oder auch extrudiert sein.

US 2004/0035911 offenbart einen Teil mit Vierschicht-Technik aus einem Kern-Werkstoff mit einer Aluminium enthaltend Plattierung an einer Seite des Kern-Werkstoffes und mit einer Lot-fördend plattierung darauf.

Die DE 102005059717 A1 offenbart eine Vorrichtung zum Austausch von Wärme zwischen einem säurehaltigen Gas und einem Wärmetauschermedium, mit zumindest einem Strömungskanal für das säurehaltige Gas, der im Wesentlichen aus Aluminium und/oder einer Aluminiumlegierung besteht.

Die DE 1677069 B betrifft ein Verfahren zum Herstellen aus zwei Aluminiumplatinen und einer Einrichtung zur Durchführung dieses Verfahrens.

Die DE 60200818 T2 betrifft ein Verfahren zur Herstellung eines Wärmetauschers, umfassend Rohre aus einer Legierung, die jeweils eine thermisch mit Zn besprühte Schicht, die an der jeweiligen Oberfläche ausgebildet ist, und eine Lotschicht aufweist, die an der thermisch aufgesprühten Zn-Schicht unter Verwendung eines pulverförmigen Lots aus einer Aluminium-Legierung ausgebildet ist, die aus 5 bis 60 Gew.-% Si und im Übrigen aus Al und unvermeidbaren Verunreinigungen zusammengesetzt ist, und die mit einem Kopfteil aus Al oder einer Al-Legierung verlötet sind, die eine Lotschicht aufweist, die unter Verwendung eines pulverförmigen Lots aus einer Al-Legierung gebildet ist, die aus 5 bis 60 Gew.-% Si und im Übrigen aus Al und unvermeidbaren Verunreinigungen besteht.

Die DE 909789 (C) betrifft ein Lötmittel, insbesondere zum Hartlöten von Aluminium oder Aluminiumlegierungen, und seine Anwendung.

Die DE 4120748 A1 betrifft ein Verfahren zur Herstellung von Wärmetauschem, deren Rohrsystem aus Flachrohrschlangen, vorzugsweise aus Leichtmetall besteht, welche an den ebenen Rohrseiten mit einem Lot beschichtet werden, wobei die ebenen Seiten des Rohres in den gestreckten Rohrbereichen der Flachrohrschlange an den Stellen, welche mit wellen- oder zickzackförmig gebogenen Lamellen verbunden werden sollen, mit einer Lötpaste beschichtet werden.

Die Korrosionsbeständigkeit von aus Blechen geformten und dann geschweißten oder gelöteten Aluminium-Rohren kann durch eine Schutzplattierung auf der Innenseite erhöht werden. Üblicherweise wird hierfür eine Zinkhaltige Aluminiumlegierung verwendet.

Nachteilig bei der Herstellung bekannter Aluminium-Wärmeübertrager aus Aluminiumrohren mit einer zinkhaltigen Schutzplattierung auf der Innenseite ist jedoch, dass dann keine Innenverlötung mehr möglich ist. Eine solche Innenverlötung ist zur Erhöhung der mechanischen Stabilität jedoch wünschenswert.

Es ist somit Aufgabe der vorliegenden Erfindung, gelötete Aluminium-Wärmeübertrager mit einer Erhöhung der Beständigkeit gegenüber kühlmittelseitiger Korrosion und unter Vermeidung der aus dem Stand der Technik bekannten Nachteile zu schaffen, die eine hohe Lebensdauer aufweisen und einfach herzustellen sind.

Diese Aufgabe wird gelöst durch einen gelöteten Aluminium-Wärmeübertrager mit den Merkmalen des Anspruchs 1.

Der erfindungsgemäße gelötete Aluminium-Wärmeübertrager ist durch eine Innen-Lötung mit zumindest mit einem Kopfteil verbundenen, Kühlmittel durchflossenen Rohren aus einem Kern-Werkstoff; mit in Vierschicht-Technik einer Aluminium enthaltenden Schutzplattierung an einer nach innen weisenden Seite des Kern-Werkstoffes; und mit einer Innen-Lotplattierung auf der Schutzplattierung sowie mit einer Außen-Lotplattierung auf der der Kühlmittelseite abgewandten Außenseite des Rohres, gekennzeichnet. Grundidee ist es, einen gelöteten Aluminium-Wärmeübertrager zu schaffen, der auf der Kühlmittelseite eine Schutzplattierung mit einer darauf angeordneten weiteren Lotplattierung besitzt. Die Schutzplattierung auf der Leichtmetallkomponente hat unterschiedliche Funktionen und Vorteile.

Beispielsweise können Plattierungen weitaus dicker als galvanische Überzüge eingestellt werden und weisen zudem in sich homogene, geschlossene Oberflächen auf. Auch kann eine signifikante Erhöhung der Heißgaskorrosionsbeständigkeit erzielt werden.

Das Aluminium in der Schutzplattierung kann in Reinform oder in Form einer Legierung vorliegen.

Bevorzugt kann die Schutzplattierung eine zinkhaltige Aluminiumlegierung enthalten. Die Schutzplattierung kann dabei aus jeder beliebigen Aluminiumlegierung unter Zusatz von Zink bestehen. Im Rahmen der vorliegenden Erfindung haben sich Schutzplattierungen mit unedleren Elementen wie Zink als besonders vorteilhaft erwiesen.

Beispielsweise kann die Schutzplattierung eine Aluminium-Mangan Basislegierung mit Zugabe von 0,2 bis 10 Gewichts % Zink, insbesondere zwischen 1 und 8 Gewichts % bzw. zwischen 2 und 6 Gewichts % Zink enthalten, um eine ähnliche mechanische Festigkeit wie in der Kemlegierung zu erreichen. Diese Werte haben sich im Rahmen der vorliegenden Erfindung als besonders vorteilhaft erwiesen.

Eine Ausführungsform sieht vor, dass eine Zinklegierung für die Schutzlegierung im Sinne einer Zink-Diffusionstiefe von 20-200 µm, insbesondere 40-150 µm bzw. insbesondere 50-120 µm und einem maximalen Zink-Gehalt von 0,1 bis 8 Gewichts %, insbesondere 0,5 bis 6 Gewichts %, vorteilhafter 1 bis 4 Gewichts %, geschaffen werden kann, jeweils ermittelt an der Obertläche der Kühlmittelseite, insbesondere der Innenoberfläche eines durchflossenen Rohres des Aluminium-Wärmeübertragers. Diese Werte haben sich im Rahmen der vorliegenden Erfindung als besonders vorteilhaft erwiesen.

Bereits geringe Zusätze der Legierungselemente Magnesium, Silicium, Kupfer, Zink oder Mangan ändern sehr stark die Eigenschaften des reinen Aluminiums. Insbesondere werden Festigkeit und Härte gesteigert, die elektrische Leitfähigkeit gesenkt, während die Umformbarkeit nur gering nachlässt.

Beispielsweise kann vorgesehen sein, eine zusätzliche Schutzplattierung auf der Innenseite vorzusehen.

Eine weitere Ausführungsform sieht einen gelöteten Aluminium-Wärmeübertrager mit durch eine Innenlötung mit zumindest mit einem Kopfteil, insbesondere mit einem Boden oder Deckel verbundenen, von einem Kühlmittel beflossenen Rohren aus einem Kem-Werkstoff; mit einer Lotplattierung, insbesondere 4045 bzw. 4343 mit 10% Dicke, auf der Innenseite; und mit einer Zn-haltigen Schutzplattierung auf der Außenseite der zusammenzubauenden Teile des Wärmeübertragers, vor.

Vorzugsweise kann eine Anwendung des gelöteten Aluminium-Wärmeübertragers in einem Kondensator oder einem Verdampfer vorgesehen sein.

Als Kernlegierung kann jede für Wärmetauscherrohre übliche Kernlegierung verwendet werden. Je nach zum Einsatz kommenden Innenverlötungsverfahren, kann die Kernlegierung beispielsweise Magnesium enthalten.
Wird eine Mg-haltige Kernlegierung verwendet, kann die Innenverlötung flussmittelfrei erfolgen. Wird eine Mg-freie Kernlegierung verwendet, kann die Innenverlötung flussmittelbehaftet erfolgen.

Die Aufbringung des Flussmittels kann dabei wahlweise vor der Rohrfertigung auf das Bandmaterial (Coil-Flux), in-line während der Rohrfertigung oder nach der Rohrfertigung durch beispielsweise Tauchen der Rohre oder des kompletten Wärmeübertragers in Flussmittelsuspension erfolgen.

Beispielsweise kann in Bezug auf das Wandmaterial (Coil-Flux) die Flussmittelbeschichtung vollständig oder lediglich partiell aufgebracht werden.

Durch die leichteren Wärmeübertrager kann der Kraftstoffverbrauch von Kraftfahrzeugen reduziert werden. Im Vergleich zum Laserschweißen sind die im Lötverfahren hergestellten Wärmeübertrager günstiger und erlauben höhere Durchsatzzahlen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Es zeigen:
- Fig. 1: schematischer Vierschichtaufbau eines Rohres zur Bildung eines gelöteten Aluminium-Wärmeübertragers;
- Fig. 2: schematisch dargestellte erste Rohrgeometrie;
- Fig. 3: schematisch dargestellte zweite Rohrgeometrie;
- Fig. 4: schematisch dargestellte dritte Rohrgeometrie.

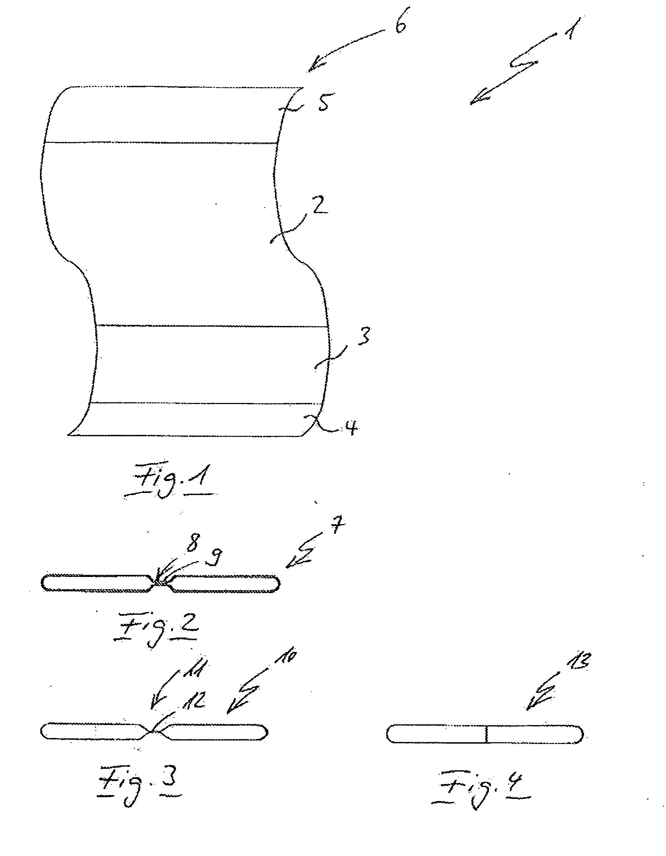

Fig. 1 zeigt den schematisch dargestellten Vierschichtaufbau eines Rohrs 1 zur Schaffung eines gelöteten Aluminium-Wärmeübertragers.

Das Rohr 1 besteht aus einem Kern-Werkstoff 2 sowie einer Aluminium enthaltenden Schutzpiattierung 3 an der Innenseite des Kern-Werkstoffes 2, Ferner ist eine Innen-Lotplattierung 4 auf der Schutzplattierung 3 sowie eine Außen-Lötplattierung 5 auf der der Kühlmittelseite abgewandten Außenseite 6 des Rohres 1 vorgesehen.

Fig. 2 zeigt eine schematisch dargestellte erste Rohrgeometrie im Querschnitt. Das Rohr 7 ist hierbei als geschweißtes Sickenrohr ausgebildet. Die Sicke 8 kann manuell oder maschinell hergestellt sein und bildet eine rinnenförmige Vertiefung 9 im Rohr 7, die im Wesentlichen zur Erhöhung der Steifigkeit dient.

Fig. 3 zeigt eine schematisch dargestellte zweite Rohrgeometrie im Querschnitt. Das Rohr 10 ist hierbei als gelötetes Sickenrohr ausgebildet. Die Sicke 11 kann manuell oder maschinell hergestellt sein und bildet eine rinnenförmige Vertiefung 12 im Rohr 10, die im Wesentlichen zur Erhöhung der Steifigkeit dient.

Fig. 4 zeigt eine schematisch dargestellte dritte Rohrgeometrie im Querschnitt. Das Rohr 13 kann hierbei als geschweißtes, gelötetes oder extrudiertes Stegrohr ausgebildet sein.

## Patentansprüche

1. Gelöteter Aluminium-Wärmeübertrager mit zumindest mit einem Kopfteil verbundenen Kühlmittel durchflossenen Rohren (1, 7, 10, 13), wobei die Rohre durch eine Innen-Lötung mit dem Kopfteil verbunden sind, wobei die Rohre in einer Vierschicht-Technik gebildet sind, a) aus einem Kern-Werkstoff (2); b.) mit einer Aluminium enthaltenden Schutzplattierung (3) an einer nach innen weisenden Seite des Kern-Werkstoffes (2); und c.) mit einer Innen-Lotplattierung (4) auf der Schutzplattierung (3); sowie d.) mit einer Außen-Lotplattierung (5) auf der der Kühlmittelseite abgewandten Außenseite des Rohres.

2. Gelöteter Aluminium-Wärmeübertrager nach Anspruch 1, e.) wobei die Schutzplattierung (3) eine zinkhaltige Aluminiumlegierung enthält.

3. Gelöteter Aluminium-Wärmeübertrager nach Anspruch 1, f.) wobei die Schutzplattierung eine Schutzplattierung (3) ist, enthaltend eine Aluminium-Mangan Basislegierung mit Zugabe von 0,2 bis 10 Gewichts % Zink, insbesondere zwischen 1 und 8 Gewichts % bzw. zwischen 2 und 6 Gewichts %.

4. Gelöteter Aluminium-Wärmeübertrager nach zumindest einem der Ansprüche 1 bis 3, g.) mit einer Zinklegierung für die Schutzplattierung (3) im Sinne einer Zink-Diffusfonstiefe von 20-200 µm, insbesondere 40-150 µm bzw. insbesondere 50-120 µm und einem maximalen Zink-Gehalt von 0,1 bis 8 Gewichts %, insbesondere 0,5 bis 6 Gewichts %, vorteilhafter 1 bis 4 Gewichts %, jeweils ermittelt an der Oberfläche der Kühlmittelseite, insbesondere der Innenoberfläche eines durchflossenen Rohres des Aluminium-Wärmeübertragers.

5. Gelöteter Aluminium-Wärmeübertrager gemäß zumindest einem der vorhergehenden Ansprüche, mit Anwendung in einem Kondensator oder einem Verdampfer.

6. Gelöteter Aluminium-Wärmeübertrager gemäß zumindest einem der vorhergehenden Ansprüche, mit einer Mg-haltigen Legierung für den Kem-Werkstoff (2) und einer flussmittelfreien Innenverlötung.

7. Gelöteter Aluminium-Wärmeübertrager gemäß zumindest einem der vorhergehenden Ansprüche, mit einer Mg-freien Legierung für den Kern-Werkstoff (2) und einer flussmittelbehafteten Innenverlötung.

## Claims

1. Soldered aluminum heat exchanger with coolant-carrying tubes (1, 7, 10, 13) that are connected to at least one header, wherein the tubes are connected to the header by soldering of the inside, wherein the tubes are designed in a four-layer technology, a) made of a core material (2); b.) with aluminum-containing protective plating (3) on the inside of the core material (2); and c.) with an inside solder plating (4) on the protective plating (3); as well as d.) with an outside solder plating (5) on the outside of the tube facing away from the coolant side.

2. Soldered aluminum heat exchanger according to claim 1, e.) wherein the protective plating (3) contains a zinc-containing aluminum alloy.

3. Soldered aluminum heat exchanger according to claim 1, f.) wherein the protective plating is a protective plating (3) containing an aluminum-manganese base alloy with the addition of 0.2% to 10% zinc by weight, in particular between 1% and 8% by weight or between 2% and 6% by weight.

4. Soldered aluminum heat exchanger according to at least one of claims 1 through to 3, g.), with a zinc alloy for the protective plating (3) in terms of a zinc diffusion depth of 20-200 µm, in particular 40-150 µm, or in particular 50-120 µm, and a maximum zinc content of 0.1% to 8% by weight, in particular 0.5% to 6% by weight, more advantageously 1% to 4% by weight, determined in each case at the surface of the coolant side, in particular the inside surface of a flow-carrying tube of the aluminum heat exchanger.

5. Soldered aluminum heat exchanger according to at least one of the preceding claims, with application in a condenser or an evaporator.

6. Soldered aluminum heat exchanger according to at least one of the preceding claims, with a magnesium-containing alloy for the core material (2) and inside soldering without flux.

7. Soldered aluminum heat exchanger according to at least one of the preceding claims, with a magnesium-free alloy for the core material (2) and inside soldering with the use of flux.

## Revendications

1. Echangeur de chaleur brasé, en aluminium, comprenant au moins des tubes (1, 7, 10, 13) traversés par un liquide de refroidissement et assemblés avec une pièce de tête, où les tubes sont assemblés avec la pièce de tête, par un brasage intérieur, où les tubes sont formés suivant une technique à quatre couches : a) une couche se composant d'un matériau de noyau (2) ; b.) une couche comprenant un placage de protection (3) contenant de l'aluminium et appliqué sur un côté du matériau de noyau (2) tourné vers l'intérieur ; et c.) une couche comprenant un placage brasé intérieur (4) appliqué sur le placage de protection (3) ; ainsi que d.) une couche comprenant un placage brasé extérieur (5) appliqué sur le côté extérieur du tube placé à l'opposé du côté du liquide de refroidissement.

2. Echangeur de chaleur brasé, en aluminium, selon la revendication 1, e.) où le placage de protection (3) comprend un alliage d'aluminium contenant du zinc.

3. Echangeur de chaleur brasé, en aluminium, selon la revendication 1, f.) où le placage de protection est un placage de protection (3) contenant un alliage de base se composant d'aluminium et de manganèse avec l'ajout de 0,2 % en poids à 10 % en poids de zinc, en particulier entre 1 % en poids et 8 % en poids ou bien entre 2 % en poids et 6 % en poids.

4. Echangeur de chaleur brasé, en aluminium, selon au moins l'une quelconque des revendications 1 à 3, g.) comprenant un alliage de zinc pour le placage de protection (3) allant dans le sens d'une profondeur de diffusion du zinc de 20 µm à 200 µm, en particulier de 40 µm à 150 µm, ou bien en particulier de 50 µm à 120 µm, et en ayant une teneur maximale en zinc de 0,1 % en poids à 8 % en poids, en particulier de 0,5 % en poids à 6 % en poids, de façon plus avantageuse de 1 % en poids à 4 % en poids, ces pourcentages étant déterminés à chaque fois sur la surface du côté du liquide de refroidissement, en particulier sur la surface intérieure d'un tube-traversé par le liquide - de l'échangeur de chaleur en aluminium.

5. Echangeur de chaleur brasé, en aluminium, selon au moins l'une quelconque des revendications précédentes, ayant une application dans un condenseur ou dans un évaporateur.

6. Echangeur de chaleur brasé, en aluminium, selon au moins l'une quelconque des revendications précédentes, comprenant un alliage contenant du magnésium (Mg) pour le matériau de noyau (2), et un brasage intérieur sans fondant.

7. Echangeur de chaleur brasé, en aluminium, selon au moins l'une quelconque des revendications précédentes, comprenant un alliage sans magnésium (Mg) pour le matériau de noyau (2), et un brasage intérieur avec fondant.
